# EUROPEAN PATENT SPECIFICATION

(11) **EP 1 428 070 B1**
(45) Date of publication and mention of the grant of the patent: **08.03.2006**
(21) Application number: 02751619.4
(22) Date of filing: 12.07.2002
(51) Int. Cl.: G03B 21/00, F21V 11/18, F21V 14/08

(54) **LIGHT BEAM SHAPING DEVICE**
LICHSTRAHLFORMUNGSVORRICHTUNG
DISPOSITIF DE FORMATION DE FAISCEAU LUMINEUX

(30) Priority: 07.09.2001 IT MI20011873
(43) Date of publication of application: 16.06.2004
(73) Proprietor: CLAY PAKY S.p.A., 24068 Seriate (IT)
(72) Inventor: QUADRI, Pasquale, I-24060 Torre de' Roveri (IT)
(74) Representative: Jorio, Paolo
(86) International application number: PCT/IT2002/000459
(87) International publication number: WO 2003/023513

(56) References cited:
- EP-A- 0 563 483
- EP-A- 0 684 424
- GB-A- 1 561 165
- US-A- 1 738 945

## Description

### TECHNICAL FIELD

The present invention relates to a light beam shaping device.

### BACKGROUND ART

As is known, light beam shaping devices are normally used in stage lighting projectors to alter the cross section of light beams.

Each device comprises a given number of movable shielding members, which can be variously positioned to intercept different portions of the light beam emitted by the projector, and so alter the shape of the cross section of the light beam issuing from the shaping device. The range of beam cross section shapes obviously depends on the number of shielding members provided, which, for reasons of size, tends to be relatively small. This is due to each shielding member being operated by a respective actuator comprising relative transmission members, which must be operated without interfering with those of another actuator. Moreover, the overall size of the shaping device must be such as to enable it to be assembled inside the projector, possibly together with other optical devices.

Some known shaping devices with four shielding members have the aforementioned drawbacks, such as tight component packing to minimize the overall size of the device, and allow little freedom in which to maneuver the shielding members. Such packing, in fact, greatly reduces the amount of space available for the movable (shielding and transmission) members, which therefore have very little freedom of movement, to the extent, for example, of it being impossible to form triangles of various areas concentric with the light beam. Moreover, the shielding member actuators are controlled electronically by normally open-loop logic units; and a possible shift in the initial position settings during normal operation may result in accidental collision of the movable members, and even in irreparable damage. In particular, collisions may occur between the moving parts of the actuators and shielding members moving in the same direction.

### DISCLOSURE OF THE INVENTION

It is an object of the present invention to provide a shaping device designed to eliminate the aforementioned drawbacks.

According to the present invention, there is provided a light beam shaping device as claimed in claim 1.

In this way, the light beam shaping device allows translating and rotating each shielding member independently from the other shielding members so as to confer to the light beam a cross section having shapes, for example, of triangles of different sizes and in different positions.

### BRIEF DESCRIPTION OF THE DRAWINGS

A non-limiting embodiment of the invention will be described by way of example with reference to the accompanying drawings, in which:
Figure 1 shows a partly exploded view in perspective of a light beam shaping device in accordance with the present invention and housed in a projector;
Figure 2 shows a front view, with parts removed for clarity, of the Figure 1 shaping device;
Figures 3, 4 and 5 show rear views of a portion of the Figure 1 shaping device in respective operating positions.

### BEST MODE FOR CARRYING OUT THE INVENTION

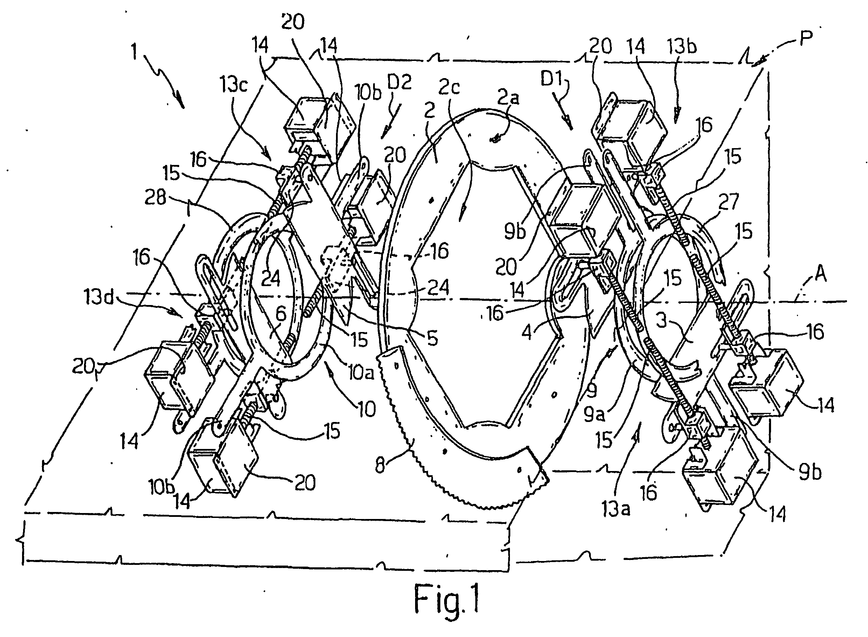

Number 1 in Figure 1 indicates as a whole a shaping device comprising a supporting body 2 fittable to a stage lighting projector P; a first, a second, a third, and a fourth shielding member 3, 4, 5, 6; and a first and a second separating member 9, 10.

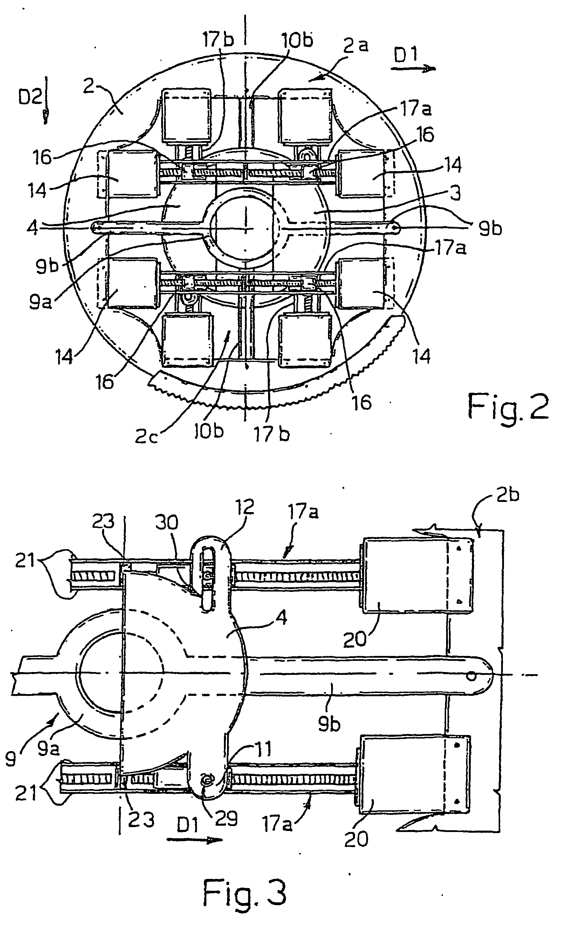

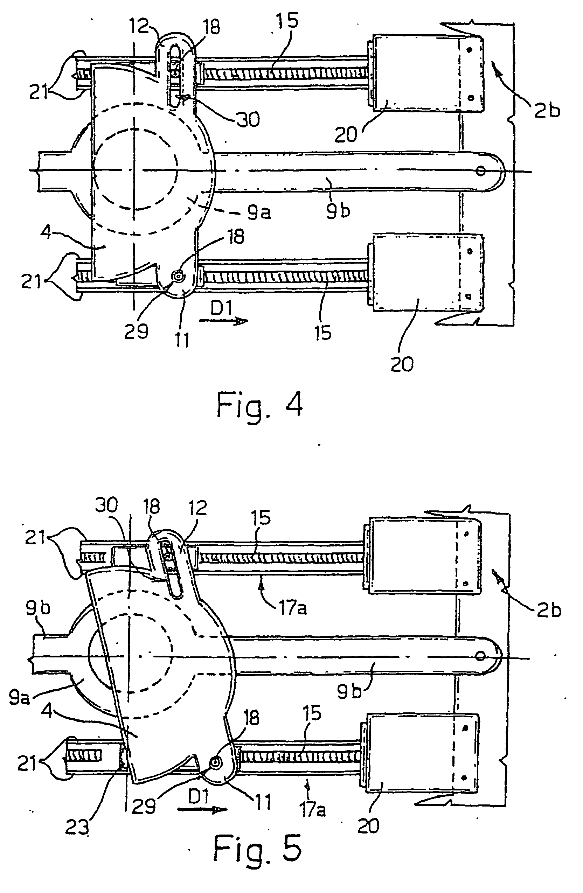

Supporting body 2 is annular, extends about an axis A of symmetry, and comprises a first face 2a, a second face 2b (Figures 3, 4 and 5) opposite first face 2a, and a central opening 2c. On first face 2a, supporting body 2 is fitted with a sector gear 8, which meshes with a known gear (not shown) on projector P to rotate shaping device 1 about axis A.

Shielding members 3-6 lie in separate respective planes perpendicular to axis A of supporting body 2. More specifically, first and second shielding member 3, 4 are located on the side of face 2a of supporting body 2, and move in their respective planes substantially in a direction D1; whereas third and fourth shielding member 5, 6 are located on the side of face 2b of supporting body 2, and move in their respective planes substantially in a direction D2 perpendicular to direction D1.

Shielding members 3-6 are semicircular or half-oval in shape, and have respective first and second coplanar connecting appendixes 11, 12 extending on opposite sides.

First and second separating member 9, 10 comprise respective annular portions 9a, 10a, and respective connecting arms 9b, 10b fixed to supporting body 2. In use, the light beam generated by projector P travels through annular portions 9a and 10a, which extend about axis A and are coaxial with supporting body 2. Connecting arms 9b are parallel to first direction D1; connecting arms 10b are parallel to direction D2; first separating member 9 is interposed between first and second shielding member 3, 4; second separating member 10 is interposed between third and fourth shielding member 5, 6; and each shielding member 3-6 can be superimposed completely over annular portions 9a, 10a of first and second separating member 9, 10, and can be variously tilted (Figures 3-5).

A first and a second guard member 27, 28, substantially similar to separating members 9, 10, are superimposed over separating members 9, 10 respectively to form gaps housing the outer shielding members, i.e. first and fourth shielding member 3, 6.

Shaping device 1 also comprises four actuators 13a, 13b, 13c, 13d for operating respective shielding members 3-6 independently. More specifically, actuators 13a and 13b connected to shielding members 3 and 4 are located on the side of face 2a of supporting body 2; and actuators 13c and 13d are located on the side of face 2b of supporting body 2. Each actuator 13a-13d comprises two step motors 14; two threaded shafts 15 powered by respective motors 14; and two slides 16 fitted to respective shafts 15 by respective screw-nut screw couplings, so that rotation of shafts 15 corresponds to displacement of slides 16. Threaded shafts 15 of each actuator 13a-13d are parallel to each other, and slides 16 run along straight guides 17a, 17b defined by respective rails 21. Actuators 13a and 13b are connected rigidly to each other by two first guides 17a extending parallel to direction D1 between two opposite motors 14; and actuators 13c and 13d are connected rigidly to each other by two second guides 17b extending parallel to direction D2 between two opposite motors 14.

Each first guide 17a houses a slide 16 of actuator 13a, a slide 16 of actuator 13b, and respective threaded shafts 15; and each second guide 17b houses a slide 16 of actuator 13c, a slide 16 of fourth actuator 13d, and respective threaded shafts 15. In other words, the slides 16 of actuators 13a and 13b, connected respectively to the first and second shielding member 3, 4, are only movable in direction D1 with respect to supporting body 2; while the slides 16 of actuators 13c and. 13d, connected respectively to the third and fourth shielding member 5, 6, are only movable in direction D2 with respect to supporting body 2.

At opposite ends, guides 17a, 17b have shoulders 22 resting against supporting brackets 20 of step motors 14 to simplify assembly and keep threaded shafts 15 aligned correctly; and, at respective mid-portions, guides 17a, 17b have stop devices 23 for arresting slides 16 and preventing accidental collision. Each slide 16 comprises an appendix 24. More specifically, appendixes 24 of the slides 16 housed in each of first and second guides 17a, 17b are positioned facing each other to keep slides 16 a predetermined minimum distance apart.

Slides 16 have pins 18 engaging respective seats defined by holes 29 formed in connecting appendixes 11, and by slots 30 formed in connecting appendixes 12 of shielding members 3-6.

The further advantages of the invention will be clear from the foregoing description. In particular, actuators 13 are extremely precise and easy to produce, so that the risk of positioning errors of shielding members 3-6 which might impair the quality of the resulting lighting effect is greatly reduced, thus improving the reliability of shaping device 1 as a whole.

Moreover, straight guides 17 are designed to ensure correct alignment of threaded shafts 15 of step motors 14 during assembly, thus further improving the accuracy of shaping device 1.

Clearly, changes may be made to the shaping device as described herein without, however, departing from the scope of the present invention.

## Claims

1. A light beam shaping device comprising a supporting body (2) extending about an axis (A) and having an opening (2c) for a light beam; a number of shielding members (3, 4, 5, 6) movable at said opening (2c), said shielding members (3, 4, 5, 6) being movable in separate respective planes perpendicular to said axis (A);
separating members (9, 10) interposed between said shielding members (3, 4, 5, 6) and comprising respective annular portions (9a, 10a) through which said light beam travels;
**characterized in that** each of said shielding members (3, 4, 5, 6) can be superimposed completely over the annular portions (9a, 10a) of the separating members (9, 10).

2. A device as claimed claim 1 **characterized by** comprising at least a first, a second, a third, and a fourth shielding member (3, 4, 5, 6); and a first, a second, a third, and a fourth actuator (13a, 13b, 13c, 13d) connected to the first, second, third, and fourth shielding member (3, 4, 5, 6) respectively.

3. A device as claimed in Claim 2, **characterized in that** said supporting body (2) comprises a first and a second face (2a, 2b) opposite each other; and **in that** the first and second shielding member (3, 4) and the first and second actuator (13a, 13b) are located on the side of said first face (2a), and the third and fourth shielding member (5, 6) and the third and fourth actuator (13c, 13d) are located on the side of said second face (2b).

4. A device as claimed in Claim 2 or 3 **characterized in that** the first and second actuator (13a, 13b) are connected respectively to the first and second shielding member (3, 4) by slides (16) movable solely in a first direction (D1) crosswise to said axis (A), and the third and fourth actuator (13c, 13d) are connected respectively to the third and fourth shielding member (5, 6) by slides (16) movable solely in a second direction (D2) crosswise to said axis (A) and to said first direction (D1).

5. A device as claimed in Claim 4 **characterized in that** the second direction (D2) is perpendicular to the first direction (D1).

6. A device as claimed in Claim 4 or 5, **characterized in that** the first and second actuator (13a, 13b) are connected rigidly by two first guides (17a) parallel to said first direction (D1), and the third and fourth actuator (13c, 13d) are connacted by two second guides (17b) parallel to said second direction (D2).

7. A device as claimed in Claim 6, **characterized in that** each slide (16) runs in one of said first and second guides (17a; 17b).

8. device as claimed in Claim 7, **characterized in that** each first guide (17a) houses a slide (16) of said first actuator (13a) and a slide (16) of the second actuator (13b), and each second guide (17b) houses a slide (16) of the third actuator (13c) and a slide (16) of the fourth actuator (13d).

9. A device as claimed in Claim 7 or 8 **characterized in that** said first, second, third, and fourth actuator (13a, 13b, 13c, 13d) each comprise two motors (14) powering respective slides (16).

10. A device as claimed in Claim 9, **characterized in that** each of said motors (14) comprises a respective shaft (15) connected to a respective slide (16) by a screw-nut screw coupling.

11. A device as claimed in Claim 10 **characterized in that** each of said shafts (15) is housed in one of the first and second guides (17a, 17b).

12. A device as claimed in one of Claims 8 to 11, **characterized in that** each slide (16) comprises an appendix (24); the appendixes (24) of the slides (16) housed in the same of said first and second guides (17a, 17b) being positioned facing each other.

13. A device as claimed in one of Claims 6 to 12, **characterized in that** said first and second guides (17a, 17b) comprise stop devices (23) for arresting said slides (16).

14. A device as claimed in any one of Claims 2 to 15, **characterized by** comprising at least a first separating member (9) located between said first and second shielding member (3, 4); and a second separating member (10) located between said third and fourth shielding member (5, 6).

15. A device as claimed in Claim 14; **characterized in that** said first separating member (9) comprises a first annular portion (9a) connected to said supporting body (2) by two first arms (9b); and said second separating member (10) comprises a second annular portion (10a) connected to said supporting body (2) by two second arms (10b) extending perpendicularly to said first arms (9b).

16. A device as claimed in Claims 5 and 15 **characterized in that** said first arms (9b) of said first separating member (9) extend parallel to said first direction (D1); and said second arms (10b) of said second separating member (10) extend parallel to said second direction (D2).

17. A projector, **characterized by** comprising a shaping device (1) as claimed in any one of Claims 1 to 15.

18. A projector as claimed in Claim 17 **characterized in that** said shaping device (1) is fitted to the projector (P) to rotate about said axis (A).

## Patentansprüche

1. Lichtstrahlformungsvorrichtung, umfassend einen Tragkörper (2), der um eine Achse (A) verläuft und eine Öffnung (2c) für einen Lichtstrahl hat; mehrere Schirmteile (3, 4, 5, 6), die bei der Öffnung (2c) bewegbar sind, wobei die Schirmteile (3, 4, 5, 6) in separaten jeweiligen Ebenen, senkrecht zu der Achse (A), bewegbar sind;
Trennteile (9, 10), die zwischen den Schirmteilen (3, 4, 5, 6) angeordnet sind und jeweilige ringförmige Abschnitte (9a, 10a) umfassen, durch die der Lichtstrahl gelangt;
**dadurch gekennzeichnet, daß** jedes Schirmteil (3, 4, 5, 6) vollständig über die ringförmigen Abschnitte (9a, 10a) der Trennteile (9, 10) überlagerbar ist.

2. Vorrichtung nach Anspruch 1, **dadurch gekennzeichnet, daß** sie wenigstens ein erstes, ein zweites, ein drittes und ein viertes Schirmteil (3, 4, 5, 6) umfaßt und ein erster, ein zweiter, ein dritter und ein vierter Aktuator (13a, 13b, 13c, 13d) mit dem ersten, zweiten, dritten bzw. vierten Schirmteil (3, 4, 5, 6) verbunden ist.

3. Vorrichtung nach Anspruch 2, **dadurch gekennzeichnet, daß** der Tragkörper (2) eine erste und eine zweite Fläche (2a, 2b) umfaßt, die einander gegenüberstehen und daß das erste und zweite Schirmteil (3, 4) und der erste und zweite Aktuator (13a, 13b) an der Seite der ersten Fläche (2a) angeordnet sind und das dritte und vierte Schirmteil (5, 6) und der dritte und vierte Aktuator (13c, 13d) an der Seite der zweiten Fläche (2b) angeordnet sind.

4. Vorrichtung nach Anspruch 2 oder 3, **dadurch gekennzeichnet, daß** der erste und zweite Aktuator (13a, 13b) verbunden sind mit jeweils dem ersten und zweiten Schirmteil (3, 4) über Schlitten (16), die einzig in einer ersten Richtung (D1), kreuzweise zu der Achse (A) bewegbar sind und der dritte und vierte Aktuator (13c, 13d) jeweils mit dem dritten und vierten Schirmteil (5, 6) über Schlitten (16) verbunden sind, die einzig in eine zweite.Richtung (D2), kreuzweise zu der Achse (A) und zu der ersten Richtung (D1) bewegbar sind.

5. Vorrichtung nach Anspruch 4, **dadurch gekennzeichnet, daß** die zweite Richtung (D2) senkrecht zu der ersten Richtung (D1) ist.

6. Vorrichtung nach Anspruch 4 oder 5, **dadurch gekennzeichnet, daß** der erste und zweite Aktuator (13a, 13b) fest durch zwei erste Führungen (17a), parallel zu der ersten Richtung (D1) verbunden sind und der dritte und vierte Aktuator (13c, 13d) durch zwei zweite Führungen (17b) parallel zu der zweiten Richtung (D2) verbunden sind.

7. Vorrichtung nach Anspruch 6, **dadurch gekennzeichnet, daß** jeder Schlitten (16) in der ersten oder zweiten Führung (17a; 17b) läuft.

8. Vorrichtung nach Anspruch 7, **dadurch gekennzeichnet, daß** jede erste Führung (17a) einen Schlitten (16) des ersten Aktuators (13a) und einen Schlitten (16) des zweiten Aktuators (13b) aufnimmt und jede zweite Führung (17b) einen Schlitten (16) des dritten Aktuators (13c) und einen Schlitten (16) des vierten Aktuators (13d) aufnimmt.

9. Vorrichtung nach Anspruch 7 oder 8, **dadurch gekennzeichnet, daß** der erste, zweite, dritte und vierte Aktuator (13a, 13b, 13c, 13d) jeweils zwei Motoren (14) umfassen, die jeweilige Schlitten (16) antreiben.

10. Vorrichtung nach Anspruch 9, **dadurch gekennzeichnet, daß** jeder der Motoren (14) eine jeweilige Welle (15) umfaßt, die mit einem jeweiligen Schlitten (16) über eine Mutterschrauben-Schraubkupplung verbunden ist.

11. Vorrichtung nach Anspruch 10, **dadurch gekennzeichnet, daß** jede der Wellen (15) in der ersten oder zweiten Führung (17a, 17b) aufgenommen ist.

12. Vorrichtung nach einem der Ansprüche 8-11, **dadurch gekennzeichnet, daß** jeder Schlitten (16) einen Zusatz (24) umfaßt, wobei die Zusätze (24) der Schlitten (16), die in den gleichen ersten und zweiten Führungen (17a, 17b) aufgenommen sind, aufeinander zuweisend positioniert sind.

13. Vorrichtung nach einem der Ansprüche 6-12, **dadurch gekennzeichnet, daß** die ersten und zweiten Führungen (17a, 17b) Stoppvorrichtungen (23) umfassen zum Anhalten der Schlitten (16).

14. Vorrichtung nach einem der Ansprüche 2-13, **dadurch gekennzeichnet, daß** sie wenigstens ein erstes Trennteil (9) umfaßt, das zwischen dem ersten und zweiten Schirmteil (3, 4) angeordnet ist und ein zweites Trennteil (10), das zwischen dem dritten und vierten Schirmteil (5, 6) angeordnet ist.

15. Vorrichtung nach Anspruch 14, **dadurch gekennzeichnet, daß** das erste Trennteil (9) einen ersten ringförmigen Abschnitt (9a) umfaßt, der über zwei erste Arme (9b) mit dem Tragkörper (2) verbunden ist und das zweite Trennteil (10) einen zweiten ringförmigen Abschnitt (10a) umfaßt, der über zwei zweite Arme (10b), die sich senkrecht zu den ersten Armen (9b) erstrecken, mit dem Tragkörper (2) verbunden ist.

16. Vorrichtung nach Anspruch 5 und 15, **dadurch gekennzeichnet, daß** die ersten Arme (9b) des ersten Trennteils (9) parallel zu der ersten Richtung (D1) verlaufen und die zweiten Arme (10b) des zweiten Trennteils (10) parallel zu der zweiten Richtung (D2) verlaufen.

17. Projektor, **dadurch gekennzeichnet, daß** er eine Formungsvorrichtung (1) umfaßt, wie sie in einem der Ansprüche 1-16 beansprucht ist.

18. Projektor nach Anspruch 17, **dadurch gekennzeichnet, daß** die Formungsvorrichtung (1) derart an den Projektor (P) angebracht ist, daß sie sich um die Achse (A) dreht.

## Revendications

1. Un dispositif de formation de faisceau lumineux comprenant un corps de maintien (2) s'étendant par rapport à un axe (A) et possédant une ouverture (2c) pour un faisceau lumineux ; un nombre de membres écrans déplaçables (3, 4, 5, 6) à ladite ouverture (2c), lesdits membres écrans (3, 4, 5, 6) étant déplaçables selon des plans respectifs distincts perpendiculaires audit axe (A) ;
des membres de séparation (9, 10) interposés entre lesdits membres écrans (3, 4, 5, 6) et comprenant des portions annulaires respectives (9a, 10a) à travers lesquelles ledit faisceau lumineux passe ;
**caractérisé en ce que** chacun desdits membres écrans (3, 4, 5, 6) peut être disposé en super imposition totale au-dessus des portions annulaires (9a, 10a) des membres de séparation (9, 10).

2. Un dispositif selon la revendication 1, **caractérisé en ce qu'**il comprend au moins un premier, un deuxième, un troisième et un quatrième membre écran (3, 4, 5, 6) ; et un premier, un deuxième, un troisième et un quatrième activateur (13a, 13b, 13c, 13d) respectivement couplés avec le premier, deuxième, troisième et quatrième membre écran (3, 4, 5, 6).

3. Un dispositif selon la revendication 2, **caractérisé en ce que** ledit corps de maintien (2) comprend un premier et un deuxième côté (2a, 2b) opposés l'un à l'autre ; et **en ce que** lesdits premier et deuxième membres écrans (3, 4) et les premier et deuxième activateurs (13a, 13b) sont disposés du côté dudit premier côté (2a) et lesdits troisième et quatrième membres écrans (5, 6) et les troisième et quatrième membre activateur (13c, 13d) sont disposés du côté dudit deuxième côté (2b).

4. Un dispositif selon la revendication 2 ou 3, **caractérisé en ce que** les premier et deuxième activateurs (13a, 13b) sont respectivement couplés avec les premier et deuxième membres écrans (3, 4) par des coulisses (16) déplaçables uniquement selon une première direction (D1) en travers dudit axe (A), et **en ce que** les troisième et quatrième activateurs (13c, 13d) sont respectivement couplés avec les troisième et quatrième membres écrans (5, 6) par des coulisses (16) déplaçables uniquement selon une deuxième direction (D2) en travers dudit axe (A) ainsi que de ladite première direction (D1).

5. Un dispositif selon la revendication 4, **caractérisé en ce que** la deuxième direction (D2) est perpendiculaire à la première direction (D1).

6. Un dispositif selon la revendication 4, ou 5, **caractérisé en ce que** les premier et deuxième activateurs (13a, 13b) sont couplés rigidement par deux premiers guides (17a) parallèles à ladite première direction (D1), et les troisième et quatrième activateurs (13c, 13d) sont couplés rigidement par deux seconds guides (17b) parallèles à ladite deuxième direction (D2).

7. Un dispositif selon la revendication 6, **caractérisé en ce que** chaque coulisse (16) passe dans l'un desdits premiers et seconds guides (17a, 17b).

8. Un dispositif selon la revendication 7, **caractérisé en ce** chaque premier guide (17a) contient une coulisse (16) dudit premier activateur (13a) et une coulisse (16) du deuxième activateur (13b), et chaque second guide (17b) contient une coulisse (16) du troisième activateur (13c) et une coulisse (16) du quatrième activateur (13d).

9. Un dispositif selon la revendication 7 ou 8, **caractérisé en ce que** lesdits premier, deuxième, troisième et quatrième activateurs (13a, 13b, 13c, 13d) comprennent chacun deux moteurs (14) entraînant des coulisses respectives (16).

10. Un dispositif selon la revendication 9, **caractérisé en ce que** chacun desdits moteurs (14) comprend un arbre respectif (15) couplé avec une coulisse respective (16) au moyen d'un accouplement par vissage d'une vis et d'un écrou.

11. Un dispositif selon la revendication 10, **caractérisé en ce que** chacun desdits arbres (15) est contenu dans l'un des premiers et seconds guides (17a, 17b).

12. Un dispositif selon l'une des revendications 8 à 11, **caractérisé en ce que** chaque coulisse (16) comprend un appendice (24) ; les appendices (24) des coulisses (16) contenus dans le même desdits premiers et seconds guides (17a, 17b) étant positionnés de telle manière à se faire face les uns aux autres.

13. Un dispositif selon l'une des revendications 6 à 12, **caractérisé en ce que** chaque lesdits premiers et seconds guides (17a, 17b) comprennent des dispositifs d'arrêt (23) pour arrêter lesdites coulisses (16).

14. Un dispositif selon l'une quelconque des revendications 2 à 13, **caractérisé en ce qu'**il comprend au moins un premier membre de séparation (9) disposé entre lesdits premier et deuxième membres écrans (3, 4) ; et un deuxième membre de séparation (10) disposé entre lesdits troisième et quatrième membres écrans (5, 6).

15. Un dispositif selon la revendication 14, **caractérisé en ce que** ledit premier membre de séparation (9) comprend une première portion annulaire (9a) couplée avec ledit corps de maintien (2) par deux premiers bras (9b) ; et ledit deuxième membre de séparation (10) comprend une deuxième portion annulaire (10a) couplée avec ledit corps de maintien (2) par deux seconds bras (10b) s'étendant perpendiculairement par rapport auxdits premiers bras (9b).

16. Un dispositif selon les revendication 5 et 15, **caractérisé en ce que** lesdits premiers bras (9b) dudit premier membre de séparation (9) s'étendent parallèlement à ladite première direction (D1) ; et lesdits seconds bras (10b) dudit deuxième membre de séparation (10) s'étendent parallèlement à ladite deuxième direction (D2).

17. Un projecteur, **caractérisé en ce qu'**il comprend un dispositif de formation (1) selon l'une quelconque des revendications 1 à 16.

18. Un projecteur selon la revendication 17, **caractérisé en ce que** ledit dispositif de formation (1) est rapporté au projecteur (P) de manière à entrer en rotation par rapport à l'axe (A).
